(19) Europäisches Patentamt / European Patent Office / Office européen des brevets

(11) **EP 4 155 765 A1**

(12) **EUROPEAN PATENT APPLICATION**
published in accordance with Art. 153(4) EPC

(43) Date of publication:
**29.03.2023 Bulletin 2023/13**

(21) Application number: **21746942.8**

(22) Date of filing: **29.01.2021**

(51) International Patent Classification (IPC):
**G01S 7/4861** (2020.01)  **G01S 7/4913** (2020.01)
**G06N 3/02** (2006.01)

(52) Cooperative Patent Classification (CPC):
**G01S 7/4802; G01S 17/42; G06N 3/02**

(86) International application number:
**PCT/KR2021/001222**

(87) International publication number:
**WO 2021/154037 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 KR 20200012053**

(71) Applicants:
• **Yujin Robot Co., Ltd.
Incheon, 22013 (KR)**
• **Miele & Cie. KG
33332 Gütersloh (DE)**

(72) Inventors:
• **SHIN, Kyung Chul
Seoul 03010 (KR)**
• **PARK, Seong Ju
Gunpo-si Gyeonggi-do 15820 (KR)**
• **PARK, Gi Yeon
Incheon 21112 (KR)**
• **LEE, Kyu Beom
Incheon 21685 (KR)**

(74) Representative: **Ellerbrächter, Dirk
Postfach
33325 Gütersloh (DE)**

(54) **3D LIDAR-BASED TARGET OBJECT RECOGNITION METHOD, DEVICE, AND MOVING BODY USING SAME**

(57) Disclosed are 3D LiDAR based target object recognizing method, apparatus, and a mobile object using the same.

A target object recognizing method according to an exemplary embodiment of the present invention includes an irradiating step of irradiating laser light to a reference target object; an acquiring step of acquiring LiDAR data generated based on a reflection signal reflected from the reference target object; a learning step of generating a reference map and virtual LiDAR data based on the LiDAR data and determining a weight for recognizing a target object by performing the deep learning based on the virtual LiDAR data; and recognizing a new target object by applying the weight when new LiDAR data with respect to the new target object is acquired.

[FIG. 1]

## Description

### [Technical Field]

The present invention relates to a 3D LiDAR based target object recognizing method, apparatus, and a mobile object using the same.

### [Background Art]

The contents described in this section merely provide background information on the exemplary embodiment of the present disclosure, but do not constitute the related art.

In accordance with the development of the IT technology, studies for 3D sensing and data processing of a space and an object in an artificial intelligence field are being actively conducted. A sensing method using a 3D LiDAR provides data with respect to a range and an intensity. In the 3D LiDAR sensing method, the intensity data provides information about a surface of a target object so that it is very useful to classify and identify an object.

In the field of 3D sensing and data processing, a deep learning based artificial intelligence requires a large amount of data in various environments. However, it is difficult to collect data for the range and the intensity for various environments and materials of the object in an actual environment.

Accordingly, a data securing method for implementing a deep learning based artificial intelligence for 3D sensing and data processing and improving a performance is necessary.

### [Disclosure]

### [Technical Problem]

A major object of the present invention is to provide a 3D LiDAR based target object recognizing method and apparatus which generate a reference map based on LiDAR data for a reference target object, determines a weight by learning virtual LiDAR data generated based on the reference map, and recognize a new target object by applying a determined weight, and a mobile object using the same.

### [Technical Solution]

According to an aspect of the present invention, in order to achieve the above-described object, a target object recognizing method includes an irradiating step of irradiating laser light to a reference target object; an acquiring step of acquiring LiDAR data generated based on a reflection signal reflected from the reference target object; a learning step of generating a reference map and virtual LiDAR data based on the LiDAR data and determining a weight for recognizing a target object by performing the deep learning based on the virtual LiDAR data; and a recognizing step of recognizing a new target object by applying the weight when new LiDAR data with respect to the new target object is acquired.

According to another aspect of the present disclosure, in order to achieve the above-described object, a target object recognizing apparatus includes: a transmitting unit which irradiates laser light; a receiving unit which receives a reflection signal with respect to the laser light; one or more processors; and a memory in which one or more programs executed by the processors are stored, when the programs are executed by one or more processors, the programs allow one or more processors to perform operations including: an acquiring step of acquiring LiDAR data generated based on a reflection signal obtained by reflecting the irradiated laser light from the reference target object; a learning step of generating a reference map and virtual LiDAR data based on the LiDAR data and determining a weight for recognizing a target object by performing the deep learning based on the virtual LiDAR data; and a recognizing step of recognizing a new target object by applying the weight when new LiDAR data with respect to the new target object is acquired.

According to another aspect of the present disclosure, in order to achieve the above-described object, a mobile object includes: a target object recognizing apparatus which irradiates laser light, acquires LiDAR data based on a reflection signal obtained by reflecting the laser light, and calculates position information of the target object by applying a previously learned learning result; and a moving apparatus which moves the mobile object based on a position of the target object, and the target object recognizing apparatus calculates position information of the target object based on LiDAR data of the target object by applying a weight determined based on the learning result by means of a reference target object to move the mobile object.

**[Advantageous Effects]**

As described above, according to the present invention, LiDAR data can be collected without causing errors by acquiring data using a spherical photoreceptor type reference target object and LiDAR data for various shapes and materials can be collected.

Further, according to the present invention, LiDAR data for virtual target objects having various shapes and materials may be generated.

Further, according to the present invention, a large amount of data, for 3D LiDAR sensing, to which diversity (materials, shapes, and colors) of the same material is reflected may be ensured using the generated virtual LiDAR data.

Further, according to the present invention, a recognizing performance of a target material may be improved by deep learning based on a large amount of various LiDAR data.

**[Description of Drawings]**

FIG. 1 is a block diagram schematically illustrating a target object recognizing apparatus according to an exemplary embodiment of the present invention.

FIG. 2 is a flowchart for explaining a target object recognizing method according to an exemplary embodiment of the present invention.

FIG. 3 is a view for explaining an operation of acquiring and modeling LiDAR data for recognizing a target object according to an exemplary embodiment of the present invention.

FIG. 4 is a block diagram schematically illustrating a target object recognizing apparatus according to another exemplary embodiment of the present invention.

FIG. 5 is a block diagram schematically illustrating a target object recognizing apparatus according to still another exemplary embodiment of the present invention.

FIG. 6 is a block diagram schematically illustrating a mobile object using a target object recognizing apparatus according to an exemplary embodiment of the present invention.

FIG. 7 is an exemplary view illustrating a mobile object according to an exemplary embodiment of the present invention.

**[Best Mode]**

Hereinafter, exemplary embodiments of the present invention will be described in detail with reference to the accompanying drawings. If it is considered that the specific description of related known configuration or function may cloud the gist of the present invention, the detailed description will be omitted. Further, hereinafter, exemplary embodiments of the present invention will be described. However, it should be understood that the technical spirit of the invention is not limited to the specific embodiments, but may be changed or modified in various ways by those skilled in the art. Hereinafter, a 3D LiDAR based target object recognizing method, apparatus, and a mobile object using the same proposed by the present invention will be described in detail with reference to the drawings.

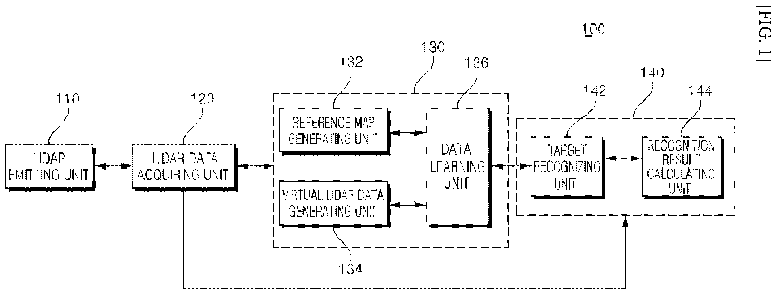

FIG. 1 is a block diagram schematically illustrating a target object recognizing apparatus according to an exemplary embodiment of the present invention.

A target object recognizing apparatus 100 according to the exemplary embodiment includes a LiDAR emitting unit 110, a LiDAR data acquiring unit 120, a learning unit 130, and a recognizing unit 140. The target object recognizing apparatus 100 of FIG. 1 is an example so that all blocks illustrated in FIG. 1 are not essential components and in the other exemplary embodiment, some blocks included in the target object recognizing apparatus 100 may be added, modified, or omitted.

The LiDAR emitting unit 110 converts an electrical signal into light and irradiates converted laser light to recognize a target object.

The LiDAR emitting unit 110 may irradiate laser light to a reference target object or a new target object. Here, the reference target object is a target object which becomes a reference for generating virtual LiDAR data with respect to a virtual target object and refers to a target object which has a spherical photoreceptor shape and can change various surface conditions, for example, various surface materials or surface colors. Further, the new target object refers to a target object to be recognized after applying a weight determined based on a virtual LiDAR data based learning result and may be various types of objects.

The LiDAR data acquiring unit 120 receives a reflection signal obtained by reflecting laser light from the target object and acquires LiDAR data generated based on the received reflection signal.

During the process of performing learning for recognizing a target object, the LiDAR data acquiring unit 120 acquires LiDAR data based on the reflection signal of the reference target object. The LiDAR data acquiring unit 120 acquires LiDAR data for a spherical photoreceptor type reference target object and acquires LiDAR data based on a reflectance of the reflection signal excluding a signal which is scattered from the spherical photoreceptor.

The LiDAR data acquiring unit 120 may acquire LiDAR data for a plurality of reference target objects. That is, the LiDAR data acquiring unit 120 acquires LiDAR data for each of the plurality of reference target objects and changes a surface condition of the spherical receptor to sequentially acquire LiDAR data. Here, the acquired LiDAR data may vary depending on the surface condition such as a surface material or a surface color of the spherical photoreceptor.

In the meantime, when the process of performing learning for recognizing a target object is completed, the LiDAR data acquiring unit 120 acquires LiDAR data based on the reflection signal of the new target object. Here, the acquired LiDAR data may be used for the recognizing unit 140 to recognize the new target object.

The learning unit 130 according to the exemplary embodiment performs an operation of determining a weight to recognize an operation by performing deep learning based on the LiDAR data. The learning unit 130 according to the exemplary embodiment may include a reference map generating unit 132, a virtual LiDAR data generating unit 134, and a data learning unit 136.

The learning unit 130 generates a reference map and virtual LiDAR data based on the LiDAR data and performs the deep learning based on the virtual LiDAR data to determine a weight for recognizing a target object.

The reference map generating unit 132 performs modeling based on range data and intensity data included in the LiDAR data to generate a reference map. Here, the range data indicates a distance between the LiDAR emitting unit 110 and the target object and the intensity data is information indicating an intensity of the reflection signal (reflected light) obtained by reflecting emitted laser light from the target object and includes surface information of an object.

Specifically, the reference map generating unit 132 generates reference data by modeling a plurality of data included in the LiDAR data and generates a reference map in accordance with a surface condition of the reference target object based on the reference data.

The reference map generating unit 132 may generate a reference map using reference data for every surface condition such as a surface material or a surface color of the reference target object.

The reference map generating unit 132 may generate reference data by modeling all or some of the plurality of information included in the LiDAR data. For example, the reference map generating unit 132 may generate reference data by modeling at least one information of an angle $\Theta_{Beam}$ between the LiDAR emitting unit 110 which irradiates laser light and the reference target object, a distance $d_{Beam}$ from the LiDAR emitting unit 110 to the surface of the reference target object, a distance $d_{Sph}$ from the LiDAR emitting unit 110 to a center of the reference target object, and a radius $r_{Sph}$ of the reference target object.

In the meantime, the reference map generating unit 132 may adjust the reference data by assigning a weight for an accuracy or a usage frequency of each of the plurality of information included in the LiDAR data. For example, when a target object to be recognized by the target object recognizing apparatus 100 is specified or a category of a shape is determined, the reference map generating unit 132 assigns a weight calculated based on an accuracy or a usage frequency for recognizing the target object to each of the plurality of information included in the LiDAR data acquired by a spherical photoreceptor to generate or adjust reference data. The reference map generating unit 132 transmits reference data which is generated by applying a weight to the virtual LiDAR data generating unit 134 to generate weight based virtual LiDAR data.

The virtual LiDAR data generating unit 134 performs an operation of generating virtual LiDAR data for a virtual target object based on the generated reference map.

The virtual LiDAR data generating unit 134 may generate virtual LiDAR data using a plurality of reference data included in the reference map. That is, the virtual LiDAR data generating unit 134 may generate virtual LiDAR data by changing a combination of a plurality of reference data included in the reference map or a value of the reference data.

In the meantime, the virtual LiDAR data generating unit 134 may be implemented by an encoder or a generator of a generative adversarial network (GAN) and generate a plurality of virtual LiDAR data by means of the encoder or the generator of the generative adversarial network (GAN). Here, the virtual LiDAR data generated by means of the encoder and the generator may generate a plurality of virtual LiDAR data based on a feature value of each reference data with the plurality of reference data included in the reference map as an input.

The data learning unit 136 performs an operation of determining a weight for recognizing a target object using virtual LiDAR data.

The data learning unit 136 performs deep learning based on the virtual LiDAR data and determines a weight based on the learning result. In the meantime, the data learning unit 136 has been described to perform the learning only using the virtual LiDAR data, but is not necessarily limited thereto. For example, the data learning unit 136 performs deep learning based on the virtual LiDAR data and LiDAR data for the reference target object and determines a weight based on the learning result. Here, the data learning unit 136 combines all or a part of the LiDAR data for the reference target object with the virtual LiDAR data to perform the deep learning. Here, the weight which is determined based on the learning result is a weight which is applied to an operation recognizing algorithm used to recognize an operation of

**EP 4 155 765 A1**

the target object and may be a weight which is applied to a convolution layer or a hidden layer included in the operation recognizing algorithm.

The recognizing unit 140 performs an operation of recognizing a target object by applying a weight determined according to the learning result and calculating a recognition result. The recognizing unit 140 according to the exemplary embodiment may include a target recognizing unit 142 and a recognition result calculating unit 144.

When new LiDAR data for the new target object is acquired, the recognizing unit 140 performs an operation of recognizing the new target object by applying a weight.

The target recognizing unit 142 performs an operation of analyzing new LiDAR data by applying a weight determined based on the learning result to recognize a new target object.

The recognition result calculating unit 144 performs an operation of calculating position information of the recognized new target object.

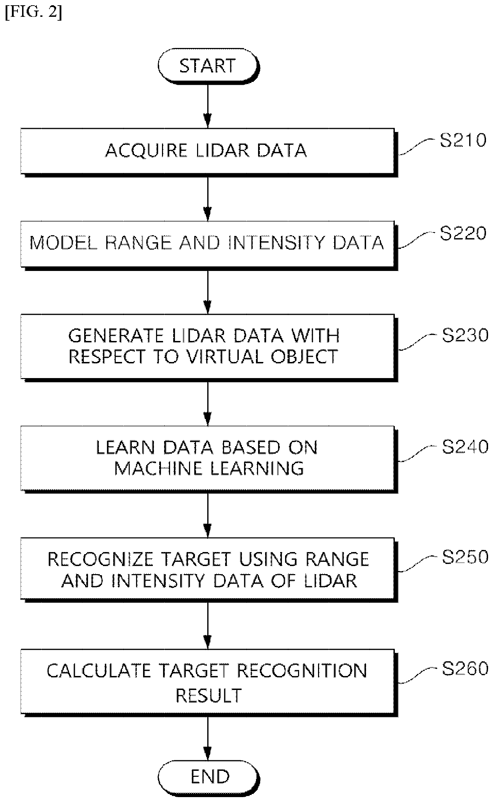

FIG. 2 is a flowchart for explaining a target object recognizing method according to an exemplary embodiment of the present invention.

The target object recognizing apparatus 100 emits laser light to the reference target object and acquires LiDAR data based on a reflection signal reflected from the reference target object in step S210.

The target object recognizing apparatus 100 acquires LiDAR data for a spherical photoreceptor type reference target object and acquires LiDAR data based on a reflectance of the reflection signal excluding a signal which is scattered from the spherical photoreceptor. Here, the acquired LiDAR data may vary depending on the surface condition such as a surface material or a surface color of the spherical receptor.

Hereinafter, an operation of performing learning based on the acquired LiDAR data by the target object recognizing apparatus 100 will be described.

The target object recognizing apparatus 100 generate a reference map based on range data and intensity data generated by modeling based on the acquired LiDAR data in step S220. Specifically, the target object recognizing apparatus 100 generates reference data by modeling range data and intensity data included in the LiDAR data and generates a reference map in accordance with a surface condition of the reference target object based on the reference data. Here, the target object recognizing apparatus 100 may generate a reference map using reference data for every surface condition such as a surface material or a surface color of the reference target object.

The target object recognizing apparatus 100 generates virtual LiDAR data for a virtual target object based on the generated reference map in step S230. The target object recognizing apparatus 100 may generate virtual LiDAR data by changing a combination of a plurality of reference data included in the reference map or a value of the reference data.

The target object recognizing apparatus 100 performs deep learning based on the virtual LiDAR data and determines a weight based on the learning result in step S240. Here, the target object recognizing apparatus 100 has been described to determine a weight only using the virtual LiDAR data, but is not necessarily limited thereto. The target object recognizing apparatus 100 performs deep learning by mixing virtual LiDAR data and LiDAR data (actual LiDAR data) with respect to the reference target object and determines a weight based on the learning result.

Hereinafter, an operation of recognizing a target object based on a weight determined by means of the learning by the target object recognizing apparatus 100 will be described.

When new LiDAR data for a target object is acquired, the target object recognizing apparatus 100 applies a determined weight to recognize a target object in step S250.

The target object recognizing apparatus 100 calculates position information of the recognized target object to generate a target recognition result in step S260.

Even though in FIG. 2, it is described that the steps are sequentially performed, the present invention is not necessarily limited thereto. In other words, the steps illustrated in FIG. 2 may be changed or one or more steps may be performed in parallel so that FIG. 2 is not limited to a time-series order.

The target object recognizing method according to the exemplary embodiment described in FIG. 2 may be implemented by an application (or a program) and may be recorded in a terminal (or computer) readable recording media. The recording medium which has the application (or program) for implementing the target object recognizing method according to the exemplary embodiment recorded therein and is readable by the terminal device (or a computer) includes all kinds of recording devices or media in which computing system readable data is stored.

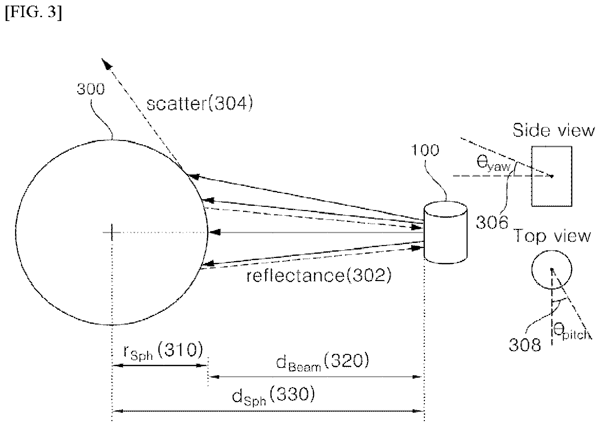

FIG. 3 is a view for explaining an operation of acquiring and modeling LiDAR data for recognizing a target object according to an exemplary embodiment of the present invention.

The target object recognizing apparatus 100 irradiates laser light to the reference target object 300 by means of the laser emitting unit 110 and receives a reflection signal 302 reflected from the reference target object 300 to acquire LiDAR data. Here, the target object recognizing apparatus 100 acquires LiDAR data using a spherical receptor as the reference target object 300 so as to minimize an error of acquired data caused according to an appearance of the target object.

The target object recognizing apparatus 100 may acquire LiDAR data including range data and intensity data

5

based on a reflectance of the reflection signal 302 excluding a signal 304 scattered from the reference target object 300. Here, the target object recognizing apparatus 100 acquires LiDAR data including a range, surface information, a direction, a speed, a temperature, a material distribution of a surface, and a concentration characteristic by measuring a time to receive the irradiated laser light, which is reflected from the reference target object 300, as a reflection signal 302, and intensity. For example, the target object recognizing apparatus 100 may acquire LiDAR data including angles $\Theta_{Beam}$ 306 and 308 between the LiDAR emitting unit 110 which irradiates laser light and the reference target object 300, a distance $d_{Beam}$ 320 from the LiDAR emitting unit 110 to the surface of the reference target object 300, a distance $d_{Sph}$ 330 from the LiDAR emitting unit 110 to a center of the reference target object 300, and a radius $r_{Sph}$ 310 of the reference target object 300, using the reflection signal 302.

Further, the target object recognizing apparatus 100 may generate reference data $i_{reflect}$ by modeling the range data and the intensity data included in the LiDAR data. Here, the modeled reference data $i_{reflect}$ may be defined by Equation 1.

[Equation 1]

$$f\left(r_{Sph}, d_{Sph}, d_{Beam}, \theta_{Beam}\right) = i_{reflect}$$

(f(x): predetermined modeling function, $r_{Sph}$: radius of reference target object 300, $d_{Sph}$: distance from LiDAR emitting unit 110 to center of reference target object 300, $d_{Beam}$: distance from LiDAR emitting unit 110 to surface of reference target object 300, $\theta_{Beam}$: angle between LiDAR emitting unit 110 and reference target object 300)

The target object recognizing apparatus 100 generates reference data for every surface condition of the reference target object 300 to generate a reference map. Here, the target object recognizing apparatus 100 may generate a reference map using reference data for every surface condition such as a surface material or a surface color of the reference target object 300.

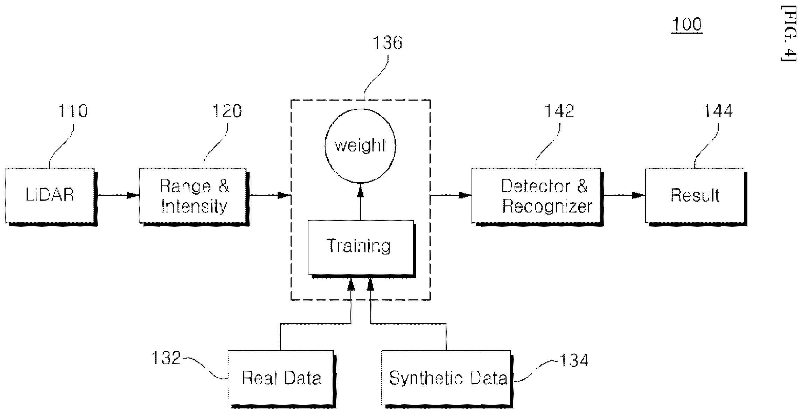

FIG. 4 is a block diagram schematically illustrating a target object recognizing apparatus according to another exemplary embodiment of the present invention.

In block 110, the target object recognizing apparatus 100 irradiates laser light to the reference target object 300 and receives a reflection signal 302 reflected from the reference target object 300 to acquire LiDAR data. Here, the target object recognizing apparatus 100 acquires LiDAR data using a spherical receptor as the reference target object 300 so as to minimize an error of acquired data caused according to an appearance of the target object (block 110).

In block 120, the target object recognizing apparatus 100 generates reference data $i_{reflect}$ by modeling the range data and the intensity data for every surface condition such as a material (for example, a fabric, a metal, or a wood) or a color of the reference target object 300 using the acquired LiDAR data. The range data and the intensity data are simultaneously acquired from the LiDAR and the range data indicates a distance from the LiDAR emitting unit 110 to the surface of the reference target object 300 and the intensity data is information indicating the intensity of the reflection signal of the emitted laser light reflected from the target object and provides surface data of the target object.

In block 132, the target object recognizing apparatus 100 may extract LiDAR data with respect to an actual target object based on the reference data. Here, the target object recognizing apparatus 100 has been described to extract actual LiDAR data based on the reference data, but is not necessarily limited thereto and the LiDAR data may be acquired based on a reflection signal which is received by irradiating laser light.

In block 134, the target object recognizing apparatus 100 generates virtual LiDAR data for the virtual target object. Specifically, the target object recognizing apparatus 100 generates virtual LiDAR data with respect to a virtual target object existing in a virtual space using reference data which is modeled using the reference target object 300. Here, the virtual LiDAR data may include virtual range data and virtual intensity data.

In block 136, the target object recognizing apparatus 100 performs an operation of determining a weight for recognizing a target object using virtual LiDAR data.

Specifically, the target object recognizing apparatus 100 performs deep learning based on the virtual LiDAR data and determines a weight based on the learning result. In the meantime, the target object recognizing apparatus 100 has been described to perform learning only using the virtual LiDAR data, but is not necessarily limited thereto. For example, the target object recognizing apparatus 100 performs deep learning based on the virtual LiDAR data and LiDAR data for the reference target object and determines a weight based on the learning result. Here, the target object recognizing apparatus 100 combines all or a part of the LiDAR data with respect to the reference target object with the virtual LiDAR data to perform the deep learning.

In blocks 142 and 144, the target object recognizing apparatus 100 performs an operation of applying the weight determined according to the learning result learned in block 136 to recognize a target object and calculating a recognition result.

When new LiDAR data with respect to a new target object is acquired, the target object recognizing apparatus 100 recognizes the new target object by applying the learning result which is learned in advance and calculates position information of the new target object using the range data and the intensity data of the new LiDAR data.

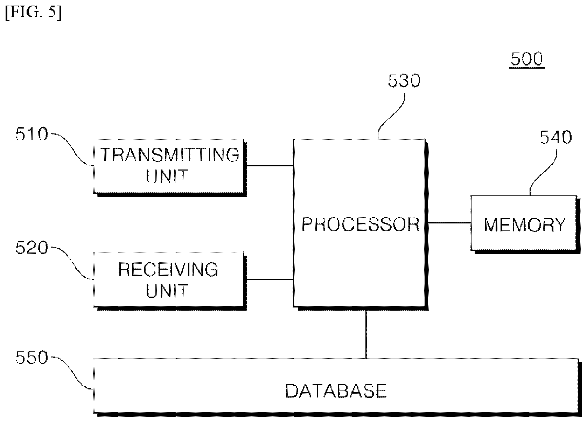

FIG. 5 is a block diagram schematically illustrating a target object recognizing apparatus according to still another exemplary embodiment of the present invention.

The target object recognizing apparatus 500 according to the exemplary embodiment may include a transmitting unit 510, a receiving unit 520, a processor 530, a memory 540, and a database 550. The target object recognizing apparatus 500 of FIG. 5 is an example so that all blocks illustrated in FIG. 5 are not essential components and in the other exemplary embodiment, some blocks included in the target object recognizing apparatus 500 may be added, modified, or omitted. In the meantime, the target object recognizing apparatus 500 may be implemented by a computing device and each component included in the target object recognizing apparatus 500 may be implemented by a separate software device or a separate hardware device in which the software is combined.

The target object recognizing apparatus 500 emits laser light to the reference target object and acquires LiDAR data generated based on a reflection signal reflected from the reference target object. The target object recognizing apparatus 500 performs an operation of generating a reference map and virtual LiDAR data based on the LiDAR data and performing the deep learning based on the virtual LiDAR data to determine a weight for recognizing a target object. When new LiDAR data for the new target object is acquired, the target object recognizing apparatus 500 performs an operation of recognizing the new target object by applying a weight.

The transmitting unit 510 may generate and output a transmission signal. The transmitting unit 510 is controlled by the processor 530. The transmitting unit 510 may output a transmission signal in the form of laser light. The transmitting unit 510 converts an electrical signal into light and includes a laser generating unit (not illustrated). For example, the transmitting unit 510 outputs a transmission signal in the form of a frequency modulated continuous wave (FMCW). Further, the transmitting unit 510 may perform beam steering with respect to the generated laser light. For example, the transmitting unit 510 may perform the beam steering by changing a path of the laser light.

The receiving unit 520 acquires a reception signal. Here, the reception signal is a reflection signal obtained by reflecting the transmission signal from the target object. The receiving unit 520 is controlled by the processor 530.

If a transmission signal corresponding to FMCW is output, the receiving unit 520 may acquire a reception signal corresponding to FMCW.

When the reception signal with respect to the laser light is received, the receiving unit 520 may include a photo detector (not illustrated). The photo detector may convert light into electricity and may be implemented by including a plurality of photo diodes PD.

The receiving unit 520 may receive a reflection signal at each point of transmitted laser light. For example, when the laser light is output toward a first point, the receiving unit 520 may receive a reception signal which returns from the first point. Further, when the laser light is output toward a second point, the receiving unit 520 may receive a reception signal which returns from the second point. As described above, the receiving unit 520 receives reflections signals which return from a plurality of continuous points to sense a reflection signal at each point.

The processor 530 performs a function of executing at least one instruction or program included in the memory 540.

The processor 530 according to the present disclosure performs an operation of performing learning based on LiDAR data acquired using the transmitting unit 510 and the receiving unit 520.

The processor 530 performs modeling based on the acquired LiDAR data to generate a reference map based on range data and intensity data. Specifically, the processor 530 generates reference data by modeling range data and intensity data included in the LiDAR data and generates a reference map in accordance with a surface condition of the reference target object based on the reference data. Here, the processor 530 may generate a reference map using reference data for every surface condition such as a surface material or a surface color of the reference target object.

Further, the processor 530 generates virtual LiDAR data for a virtual target object based on the generated reference map. The processor 530 may generate virtual LiDAR data by changing a combination of a plurality of reference data included in the reference map or a value of the reference data.

Further, the processor 530 performs deep learning based on the virtual LiDAR data and determines a weight based on the learning result. Here, the processor 530 has been described to determine a weight only using the virtual LiDAR data, but is not necessarily limited thereto. The processor 530 performs deep learning by mixing virtual LiDAR data and LiDAR data (actual LiDAR data) with respect to the reference target object and determines a weight based on the learning result.

The processor 530 according to the exemplary embodiment may perform an operation of recognizing a target object based on the weight determined by the learning.

When new LiDAR data with respect to the target object is acquired using the transmitting unit 510 and the receiving unit 520, the processor 530 recognizes a target object by applying a weight determined based on the learning result. The processor 530 generates a target recognition result by calculating position information with respect to the recognized target object.

The memory 540 includes at least one instruction or program which is executable by the processor 530. The memory 540 may include an instruction or a program for a data acquiring operation, a modeling operation, a virtual LiDAR data generating operation, and a learning operation. Further, the memory 540 may include an instruction or a program for an operation of applying a learning result and an operation of recognizing a target object. The memory 540 may be various hardware storage units such as a ROM, a RAM, an EEPROM, a flash drive, and a hard drive.

The database 150 refers to a general data structure implemented in a storage space (a hard disk or a memory) of a computer system using a database management program (DBMS) and means a data storage format which freely searches (extracts), deletes, edits, or adds data. The database 150 may be implemented according to the object of the exemplary embodiment of the present invention using a relational database management system (RDBMS) such as Oracle, Informix, Sybase, or DB2, an object oriented database management system (OODBMS) such as Gemston, Orion, or 02, and XML native database such as Excelon, Tamino, Sekaiju and has an appropriate field or elements to achieve its own function.

The database 150 according to the exemplary embodiment may store data related to the recognition of the target object and provide data related to the recognition of previously stored target object.

The data stored in database 150 may include data such as LiDAR data with respect to the reference target object, virtual LiDAR data, reference data, a reference map, a learning result, a weight, a target object recognition result, and position information of the target object. It has been described that the database 250 is implemented in the target object recognizing apparatus 100, but is not necessarily limited thereto and may be implemented as a separate data storage device.

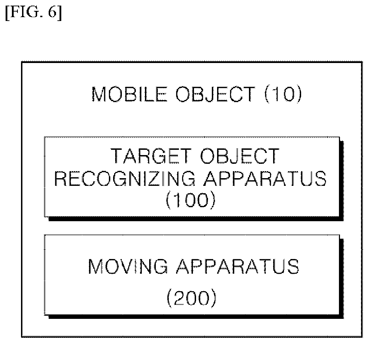

FIG. 6 is a block diagram schematically illustrating a mobile object using a target object recognizing apparatus according to an exemplary embodiment of the present invention.

As illustrated in FIG. 6, a mobile object 1 includes a target object recognizing apparatus 100 and a moving apparatus 200. The mobile object 10 may omit some components among various components which are exemplarily illustrated in FIG. 6 or may further include other component. For example, the mobile object may further include a cleaning unit.

The mobile object 10 according to the exemplary embodiment may include a target object recognizing apparatus 100 which acquires LiDAR data based on a reflection signal obtained by reflecting laser light irradiated onto the target object and calculates position information of the target object by applying a previously trained learning result and a moving apparatus 200 which moves the mobile object 10 based on the position of the target object. Here, the target object recognizing apparatus 100 calculates position information of the target object based on LiDAR data of the target object by applying a weight determined based on the learning result by means of the reference target object to move the mobile object 10.

The moving apparatus 200 included in the mobile object 10 refers to a device designed to be movable from a specific location to another location according to a predetermined method and moves from the specific location to another location using a moving unit such as wheels, rails, walking legs, wings, or a multi rotor.

The moving object 10 may collect external information using the target object recognizing apparatus 100 and then move according to the collected information or move using a separate manipulating unit by a user. Examples of the moving object 10 include robot cleaners, toy cars, and mobile robots for industrial or military purposes.

The robot cleaner is a device which sucks foreign materials such as dust accumulated on a floor while traveling a cleaning space to automatically clean the cleaning space. Differently from a normal cleaner which moves by an external force provided by a user, the robot cleaner cleans the cleaning space while moving using external information or a predetermined moving pattern.

The robot cleaner may automatically move using a predetermined pattern or detect external obstacles using a detecting sensor and then moves as it is detected. Further, the robot cleaner may move in accordance with a signal transmitted from a remote control device which is manipulated by the user.

A detecting sensor of the target object recognizing apparatus 100 may be implemented by a LiDAR (Light detection and ranging). The LiDAR is a device which transmits laser light, measures a time and an intensity of a reflection signal which is reflected to return, and measures a distance and a surface information of a reflector using a speed of light. The reflection signal is converted into an electrical signal by the photo diode and has a predetermined wavelength band.

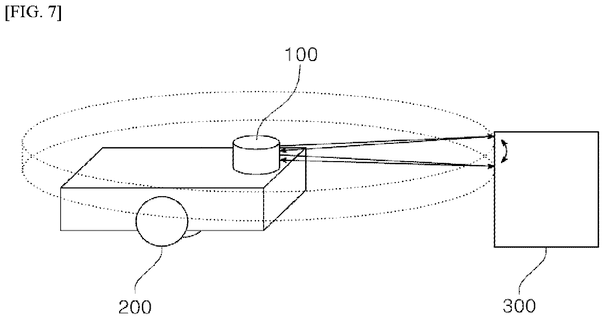

FIG. 7 is an exemplary view illustrating a mobile object according to an exemplary embodiment of the present invention.

Referring to FIG. 7, even though the target object recognizing apparatus 100 which measures range and surface information of the target object 300 by acquiring LiDAR data including range data and intensity data based on a reflection signal of the laser light between the mobile object 10 and the target object 300 is located at an upper portion of the main body, it is just illustrative. Therefore, the present invention is not limited thereto and one or more target object recognizing apparatuses may be implemented in an appropriate position according to a design to be implemented.

The target object recognizing apparatus 100 transmits and receives light using a pair of light sources and a photo diode and three-dimensionally scans surroundings using a movable mirror and a rotor.

The target object recognizing apparatus 100 may operate by a time of flight (TOF) manner. According to the time of flight manner, a laser emits a pulsed or square wave signal to measure a time when reflection pulses or square wave signals from objects within a measurement range reach a receiver to measure a distance between an object to be measured and the target object recognizing apparatus 100.

The moving apparatus 200 calculates a traveling route based on a distance to the target object or detects an obstacle to move the mobile object 10. The moving apparatus 200 may move the mobile object 10 based on a relative location of an artificial mark.

It will be appreciated that various exemplary embodiments of the present disclosure have been described herein for purposes of illustration, and that various modifications and changes may be made by those skilled in the art without departing from the scope and spirit of the present invention. Accordingly, the exemplary embodiments of the present invention are not intended to limit but describe the technical spirit of the present invention and the scope of the technical spirit of the present invention is not restricted by the exemplary embodiments. The protective scope of the exemplary embodiment of the present disclosure should be construed based on the following claims, and all the technical concepts in the equivalent scope thereof should be construed as falling within the scope of the exemplary embodiment of the present invention.

It will be appreciated that various exemplary embodiments of the present invention have been described herein for purposes of illustration, and that various modifications and changes may be made by those skilled in the art without departing from the scope and spirit of the present invention. Accordingly, the exemplary embodiments of the present invention are not intended to limit but describe the technical spirit of the present invention and the scope of the technical spirit of the present invention is not restricted by the exemplary embodiments. The protective scope of the exemplary embodiment of the present invention should be construed based on the following claims, and all the technical concepts in the equivalent scope thereof should be construed as falling within the scope of the exemplary embodiment of the present invention.

**[Description of Main Reference Numerals of Drawings]**

100: Target object recognizing apparatus

110: LiDAR emitting unit          120: LiDAR data acquiring unit

130: Learning unit                132: Reference map generating unit

134: Virtual LiDAR data generating unit    136: Data learning unit

140: Recognizing unit             142: Target recognizing unit

144: Recognized result calculating unit

**Claims**

**1.** A method for recognizing a target object in a target object recognizing apparatus, the method comprising:

> an irradiating step of irradiating laser light to a reference target object;
> an acquiring step of acquiring LiDAR data generated based on a reflection signal reflected from the reference target object;
> a learning step of generating a reference map and virtual LiDAR data based on the LiDAR data and determining a weight for recognizing a target object by performing the deep learning based on the virtual LiDAR data; and
> a recognizing step of recognizing a new target object by applying the weight when new LiDAR data with respect to the new target object is acquired.

**3.** The target object recognizing method according to claim 1, wherein in the acquiring step, the LiDAR data with respect to a spherical photoreceptor type reference target object is acquired and the LiDAR data is acquired based on a reflectance of the reflection signal excluding a signal which is scattered from the spherical photoreceptor.

**3.** The target object recognizing method according to claim 2, wherein in the acquiring step, the LiDAR data is acquired for each of the plurality of reference target objects and the LiDAR data is sequentially acquired by changing a surface condition of the spherical photoreceptor.

**4.** The target object recognizing method according to claim 2, wherein the learning step includes:

a reference generating step of generating a reference map by performing modeling based on the range data and the intensity data included in the LiDAR data;

a virtual data generating step of generating virtual LiDAR data with respect to a virtual target object based on the reference map; and

a weight determining step of determining a weight for recognizing a target object using the virtual LiDAR data.

**5.** The target object recognizing method according to claim 4, wherein in the reference generating step, reference data is generated by modeling a plurality of data included in the LiDAR data and the reference map according to a surface condition of the reference target object is generated based on the reference data.

**6.** The target object recognizing method according to claim 5, wherein in the reference generating step, the reference data is generated by modeling at least one data of an angle $\Theta_{Beam}$ between a LiDAR emitting unit which irradiates laser light and the reference target object, a distance $d_{Beam}$ from the LiDAR emitting unit to a surface of the reference target object, a distance $d_{Sph}$ from the LiDAR emitting unit to a center of the reference target object, and a radius $r_{Sph}$ of the reference target object, which are included in the LiDAR data.

**7.** The target object recognizing method according to claim 5, wherein in the reference generating step, the reference map is generated using the reference data for every surface condition for a surface material and a surface color of the reference target object.

**8.** The target object recognizing method according to claim 5, wherein in the virtual data generating step, the virtual LiDAR data is generated by changing a combination of the plurality of reference data or a value of the reference data.

**9.** The target object recognizing method according to claim 4, wherein in the weight determining step, the deep learning is performed based on the virtual LiDAR data and the weight is determined based on the learning result.

**10.** The target object recognizing method according to claim 4, wherein in the weight determining step, the deep learning is performed by mixing the virtual LiDAR data and the LiDAR data with respect to the reference target object and the weight is determined based on the learning result.

**11.** The target object recognizing method according to claim 9, wherein the recognizing step includes:

a target recognizing step of recognizing a new target object based on new LiDAR data; and

a recognition result calculating step of calculating position information of the new target object by applying the weight determined based on the learning result.

**12.** A target object recognizing apparatus, comprising:

a transmitting unit which irradiates laser light;

a receiving unit which receives a reflection signal with respect to the laser light;

one or more processors; and

a memory in which one or more programs executed by the processors are stored, wherein when the programs are executed by one or more processors, the programs allow one or more processors to perform operations including:

an acquiring step of acquiring LiDAR data generated based on a reflection signal obtained by reflecting the irradiated laser light from the reference target object;

a learning step of generating a reference map and virtual LiDAR data based on the LiDAR data and determining a weight for recognizing a target object by performing the deep learning based on the virtual LiDAR data; and

a recognizing step of recognizing a new target object by applying the weight when new LiDAR data with respect to the new target object is acquired.

**13.** The target object recognizing apparatus according to claim 12, wherein in the acquiring step, LiDAR data for a spherical photoreceptor type reference target object is acquired and the LiDAR data is acquired based on a reflectance of the reflection signal excluding a signal which is scattered from the spherical photoreceptor, and

the learning step includes

a reference generating step of generating a reference map by performing modeling based on the range data and the intensity data included in the LiDAR data;

a virtual data generating step of generating virtual LiDAR data with respect to a virtual target object based on the reference map; and

a weight determining step of determining a weight for recognizing a target object using the virtual LiDAR data.

**14.** The target object recognizing apparatus according to claim 13, wherein in the reference generating step, reference data is generated by modeling a plurality of data included in the LiDAR data and the reference map according to a surface condition of the reference target object is generated based on the reference data and in the weight determining step, the deep learning is performed based on the virtual LiDAR data, or the deep learning is performed by mixing the virtual LiDAR data and the LiDAR data with respect to the reference target object and the weight is determined based on the learning result.

**15.** A mobile object, comprising:

a target object recognizing apparatus which irradiates laser light, acquires LiDAR data based on a reflection signal obtained by reflecting the laser light, and calculates position information of the target object by applying a previously trained learning result; and

a moving apparatus which moves the mobile object based on a position of the target object,

wherein the target object recognizing apparatus calculates position information of the target object based on LiDAR data of the target object by applying a weight determined based on the learning result by means of a reference target object to move the mobile object.

[FIG. 1]

[FIG. 2]

START

ACQUIRE LIDAR DATA — S210

MODEL RANGE AND INTENSITY DATA — S220

GENERATE LIDAR DATA WITH RESPECT TO VIRTUAL OBJECT — S230

LEARN DATA BASED ON MACHINE LEARNING — S240

RECOGNIZE TARGET USING RANGE AND INTENSITY DATA OF LIDAR — S250

CALCULATE TARGET RECOGNITION RESULT — S260

END

[FIG. 3]

[FIG. 4]

EP 4 155 765 A1

[FIG. 5]

500

530

540

510

520

550

TRANSMITTING UNIT

RECEIVING UNIT

PROCESSOR

MEMORY

DATABASE

[FIG. 6]

MOBILE OBJECT (10)

TARGET OBJECT
RECOGNIZING APPARATUS
(100)

MOVING APPARATUS
(200)

[FIG. 7]

## INTERNATIONAL SEARCH REPORT

| International application No. |
| --- |
| **PCT/KR2021/001222** |

**A.    CLASSIFICATION OF SUBJECT MATTER**

**G01S 7/4861**(2020.01)i; **G01S 7/4913**(2020.01)i; **G06N 3/02**(2006.01)i

According to International Patent Classification (IPC) or to both national classification and IPC

**B.    FIELDS SEARCHED**

Minimum documentation searched (classification system followed by classification symbols)

G01S 7/4861(2020.01); G01C 3/06(2006.01); G01N 29/00(2006.01); G01S 13/08(2006.01); G01S 17/88(2006.01); G01S 17/89(2006.01); G01S 17/93(2006.01); G01S 7/41(2006.01); G01V 11/00(2006.01); G02B 7/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(lidar), 물체 인식(object recognition), 딥러닝(deep-learning), 가중치 (weight), 산란(scatter), 반사율(reflectance)

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2015-0001119 A (HYUNDAI MOBIS CO., LTD.) 06 January 2015 (2015-01-06) <br> See claims 1, 4 and 9 and figure 4. | 1-15 |
| A | JP 2004-125651 A (NIDEC COPAL CORP.) 22 April 2004 (2004-04-22) <br> See claims 1-3 and figures 1-4. | 1-15 |
| A | KR 10-2018-0088009 A (WRT LAB CO., LTD.) 03 August 2018 (2018-08-03) <br> See paragraphs [0056]-[0062] and figures 2 and 5. | 1-15 |
| A | KR 10-2013-0135016 A (KOREA INSTITUTE OF SCIENCE AND TECHNOLOGY) 10 December 2013 (2013-12-10) <br> See claims 1-4 and figures 1-3. | 1-15 |
| A | WO 2019-139656 A1 (THE REGENTS OF THE UNIVERSITY OF MICHIGAN) 18 July 2019 (2019-07-18) <br> See paragraphs [0089]-[0098] and figure 1. | 1-15 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 June 2021** | **10 June 2021** |

| Name and mailing address of the ISA/KR | Authorized officer |
| --- | --- |
| **Korean Intellectual Property Office** <br> **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/001222**

| Patent document cited in search report | | | Publication date (day/month/year) | Patent family member(s) | | | Publication date (day/month/year) |
|---|---|---|---|---|---|---|---|
| KR | 10-2015-0001119 | A | 06 January 2015 | CN | 104252630 | A | 31 December 2014 |
| | | | | CN | 104252630 | B | 20 March 2018 |
| | | | | US | 2015-0006070 | A1 | 01 January 2015 |
| | | | | US | 9037393 | B2 | 19 May 2015 |
| JP | 2004-125651 | A | 22 April 2004 | None | | | |
| KR | 10-2018-0088009 | A | 03 August 2018 | US | 2020-0011971 | A1 | 09 January 2020 |
| | | | | WO | 2018-139882 | A1 | 02 August 2018 |
| KR | 10-2013-0135016 | A | 10 December 2013 | CN | 103454288 | A | 18 December 2013 |
| | | | | CN | 103454288 | B | 31 August 2016 |
| | | | | JP | 2013-250263 | A | 12 December 2013 |
| | | | | JP | 5753218 | B2 | 22 July 2015 |
| | | | | US | 2013-0321620 | A1 | 05 December 2013 |
| | | | | US | 9830523 | B2 | 28 November 2017 |
| WO | 2019-139656 | A1 | 18 July 2019 | CN | 111448477 | A | 24 July 2020 |
| | | | | EP | 3695250 | A1 | 19 August 2020 |
| | | | | JP | 2020-537146 | A | 17 December 2020 |
| | | | | KR | 10-2020-0073247 | A | 23 June 2020 |
| | | | | US | 2020-0386892 | A1 | 10 December 2020 |

Form PCT/ISA/210 (patent family annex) (July 2019)